# FASCICULE DE BREVET EUROPEEN

(11) **EP 0 943 543 B1**
(45) Date de publication et mention de la délivrance du brevet: **05.09.2001**
(21) Numéro de dépôt: 99410012.1
(22) Date de dépôt: 04.03.1999
(51) Int. Cl.: B64D 17/02, B64D 17/48, B64C 31/028

(54) **Perfectionnement pour sellette d'un parapente**
Verbesserungen an dem Sitz eines Gleitschirms
Improvements for paraglider seats

(30) Priorité: 16.03.1998 FR 9803506
(43) Date de publication de la demande: 22.09.1999
(73) Titulaire: SUP'AIR, 74000 Annecy (FR)
(72) Inventeur: Bouilloux, Pierre, 74540 Viuz La Chiesaz (FR)
(74) Mandataire: Gasquet, Denis

(56) Documents cités:
- AT-B- 396 098
- DE-A- 2 751 117
- DE-U- 8 704 986
- DE-U- 9 416 390

## Description

La présente invention concerne une sellette du type de celle utilisée dans les sports de vol libre, tel que le parapente ou le parachutisme par exemple. Elle concerne plus particulièrement un perfectionnement de la sellette et de son équipement en matière de parachute de secours.

Ces dernières années, la pratique du parapente s'est développée rapidement et ce loisir attire ainsi de plus en plus de pratiquants amateurs de sensations. De ce fait, le matériel utilisé par les pratiquants a considérablement été modifié et s'est modernisé durant cette période. Ce développement technique a permis d'augmenter la sécurité et de diminuer les risques d'accidents. Cependant, la sécurité reste un souci majeur pour les fabriquant de matériel qui recherchent les solutions optimales, notamment en ce qui concerne les parachute auxiliaires ou parachutes de secours destinés à équiper les pratiquants.

On connaît par l'art antérieur des sellettes destinées à la pratique des sports de vol libre et qui sont équipés d'un parachute de secours destiné à être actionné par le pratiquant lorsque son parapente ou son parachute par exemple, présente un incident en vol. Toutefois, ces sellettes présentent de nombreux inconvénients dus notamment aux différents gestes qu'elle oblige le pratiquant à effectuer pour sortir son parachute auxiliaire, comme par exemple lorsque le parachute est disposé dans une poche dorsale située au niveau des hanches du pratiquant, ou dus également à la gène que peut constituer ledit parachute lors des phases de décollage ou atterrissage comme par exemple lorsqu'il est disposé de manière ventrale. Par ailleurs, certaines sellettes présentent un parachute auxiliaire situé dans une poche dorsale comportant un ensemble de rabats fermés par des moyens d'actionnement dudit parachute, ces dispositifs présentant en permanence un risque d'ouverture intempestif de la poche dorsale et donc dudit parachute notamment lors des décollages.

Le document DE 94 16 390 U montre une sellette selon le préambule de la revendication 1.

Ainsi, la présente invention a pour but de remédier aux différents inconvénients précités grâce à des moyens simples, fiables, peu onéreux et faciles à mettre en oeuvre qui sont destinés à éviter toute ouverture intempestive du parachute auxiliaire d'une part et à permettre son ouverture à l'aide d'un geste continu au lieu de nécessiter plusieurs gestes différents comme dans les dispositifs utilisés actuellement.

Un autre avantage de l'invention est que les moyens d'actionnement du parachute de secours sont visibles par l'utilisateur car situés dans son champs de vision, ils peuvent être actionnés par un geste naturel unique qui permet l'extraction du parachute de secours et sa projection vers l'extérieur dans un même mouvement.

Ainsi, selon sa caractéristique principale, la sellette selon l'invention est destinée à la pratique de sports tels que le parapente ou le parachutisme, et est du type comportant un emplacement destiné à lui permettre d'être équipée d'un parachute auxiliaire ou parachute de secours, ledit emplacement destiné au parachute auxiliaire étant situé dans la zone supérieure de la sellette au dessus de la zone centrale ou médiane occupée par le bassin de l'utilisateur

Selon une autre caractéristique de la sellette préférée, celle-ci est caractérisée en ce que l'emplacement destiné au parachute de secours est situé sur la sellette dans sa partie dorsale au niveau de la zone occupée par les épaules et le cou de l'utilisateur.

Selon une autre caractéristique de la sellette selon l'invention, l'enceinte principale présente des moyens de fermeture dont l'ouverture est commandée par l'actionnent de moyens de commande ou moyens d'actionnement destinés également à provoquer l'extraction du parachute de secours de l'enceinte principale, la sellette étant caracterisée en ce que les moyens d'actionnement sont positionnées sur l'épaule ou légèrement en dessous sur le torse de l'utilisateur grâce à des moyens de positionnement de la sellete.

Selon une caractéristique complémentaire de la sellette selon l'invention, l'emplacement est constitué par une enceinte principale présentant une ouverture destinée à l'extraction du parachute auxiliaire

Selon le mode de réalisation préféré de la sellette selon l'invention, l'ouverture de l'enceinte principale est dirigé vers l'avant et vers le haut de manière à ce que le parachute auxiliaire puisse être extrait au dessus de l'épaule ou de la tête de l'utilisateur.

Selon une autre caractéristique de la sellette, l'enceinte principale est constituée par la face externe de la paroi d'appui dorsale de la sellette et par une paroi souple, ladite enceinte principale étant disposée à l'intérieur d'une enceinte secondaire semi rigide.

Selon une variante d'exécution de la sellette selon l'invention, les moyens de positionnement sont disposés sur une bretelle supérieure de la sellette de manière à ce que les moyens d'actionnement soient disposés sur le torse ou l'épaule de l'utilisateur.

Selon le mode de réalisation préféré de la sellette, les parois latérales de l'enceinte secondaire bordant l'ouverture de l'enceinte principale destinée au parachute comportent une échancrure ou fente latérale permettant l'écartement desdites parois au niveau de l'ouverture de manière à faciliter l'extraction du parachute auxiliaire.

Les revendications 2, 4 et 10 décrivent des autres modes de réalisation préférés.

D'autres caractéristiques et avantages de l'invention se dégageront de la description qui va suivre en regard des dessins annexés qui ne sont donnés qu'à titre d'exemples non limitatifs.

Les figures 1 à 6c illustrent le mode de réalisation préféré de la sellette selon l'invention.

La figure 1 représente en perspective un parapentiste dans sa sellette.

La figure 2 illustre en perspective la sellette et son enceinte principale destinée au parachute auxiliaire.

La figure 3a illustre en perspective, la zone supérieure de la sellette dont l'enceinte principale est équipée du parachute auxiliaire.

La figure 3b illustre dans une vue similaire à la figure 3a l'enceinte secondaire et sa paroi frontale ainsi que les moyens d'actionnement du parachute.

La figure 4 représente en perspective les moyens d'actionnement du parachute de secours.

La figure 5 représente en vue de face la sellette.

La figure 6a illustre en vue latérale la sellette et un parapentiste.

La figure 6b illustre en vue latérale la sellette et le parapentiste s'apprêtant à actionner les moyens de commande du parachute.

La figure 6c représente dans une vue similaire aux figures 6a et 6b le parapentiste dans sa sellette lorsqu'il vient d'actionner les moyens de commande du parachute et projette celui-ci vers l'extérieure.

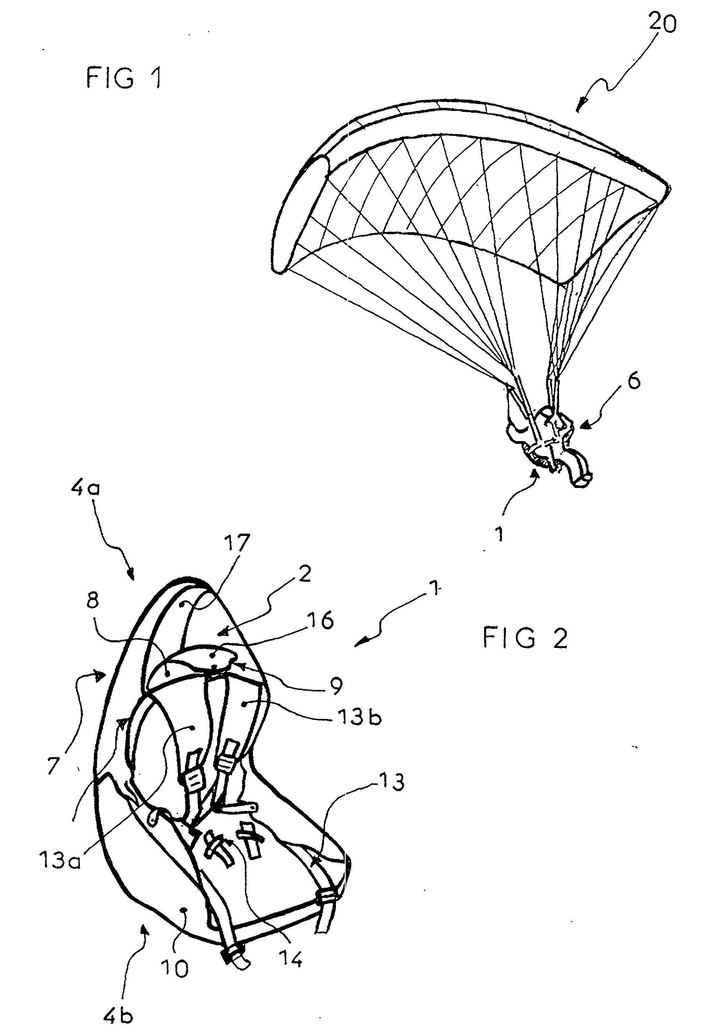

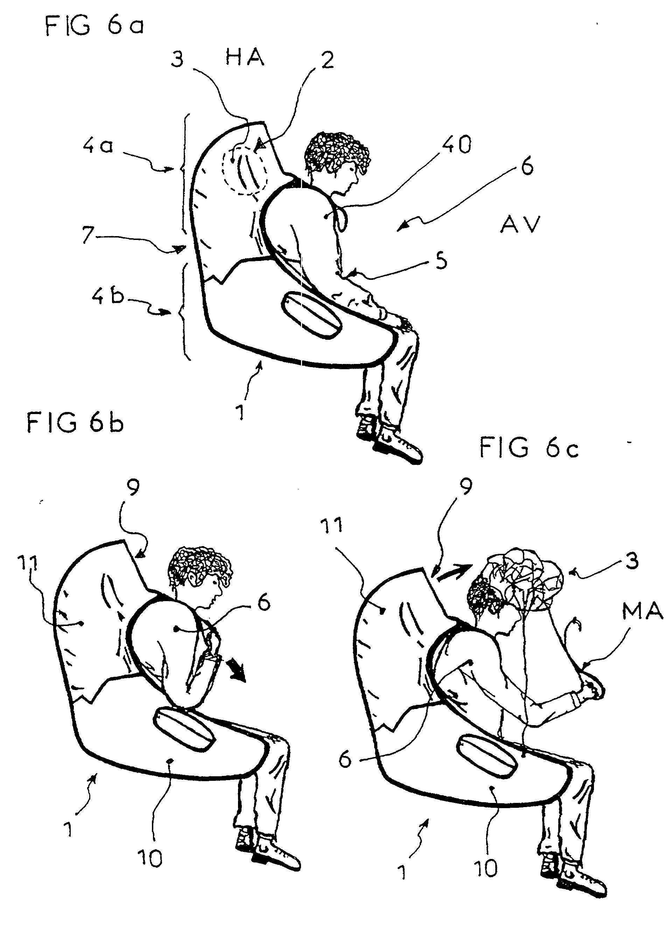

La sellette portant la référence générale (1) est destinée à être utilisée par les pratiquants des sports aériens tels que le parapente (20) ou le parachutisme comme le montre la figure 1. La sellette (1) est du type comportant un emplacement (2) destiné à lui permettre d'être équipée d'un parachute de secours appelé également parachute auxiliaire (3). L'emplacement (2) est situé dans la zone supérieure (4a) de la sellette, au dessus de la zone médiane ou centrale (4b) destinée à recevoir le bassin (5) de l'utilisateur (6) comme le montre la figure 6a.

L'emplacement (2) du parachute (3) est situé dans la partie dorsale (7) de la sellette (1) sensiblement au niveau de la zone occupée par les épaules (40) et le cou de l'utilisateur. Cet emplacement (2) est avantageusement constitué par une enceinte principale (8) munie d'une ouverture (9) par laquelle l'utilisateur (6) pourra extraire son parachute. Cette enceinte principale (8) est fermée dans son côté arrière (AR) pour présenter son ouverture (9) orientée vers l'avant (AV) et vers le haut (HA) tel qu'illustré figure 2. Il va de soi que l'enceinte principale pourrait être orientée de façon différente et présenter son ouverture latéralement par exemple sans pour autant sortir du champs de protection de l'invention.

La sellette (1) est, de manière connue en soi, constituée par une assise (10) prolongée par une paroi d'appui dorsale ou dossier (11) de manière à permettre l'installation de l'utilisateur (6) comme le montrent les figures 6a et 6b. Notons que ces parois peuvent être entourées de mousse, et disposées dans une enveloppe en tissus afin d'en améliorer le confort, la sellette (1) peut également présenter avantageusement deux parois latérales (12a, 12b) réalisées en tissus et qui prolongent latéralement l'assise (10) par exemple. De plus, la sellette présente un ensemble de sangles (13) et de moyens d'attache et de réglage associés (14) destinés à permettre à l'utilisateur de se harnacher complètement avec la sellette (1) de manière confortable, sure et fiable.

Ainsi, la sellette (1) comporte notamment deux sangles formant des bretelles supérieures (13a, 13b) reliant l'extrémité supérieure de la paroi dorsale (11) aux bord latéraux de l'assise (10) ou à une sangle formant une ceinture (13c) par exemple. Notons également que l'assise peut être munie de deux sangles de cuisses (13d, 13e). Il est important de noter que l'assise, la paroi dorsale et l'ensemble des sangles sont reliés directement ou indirectement à deux points d'ancrage (15a, 15b) destinés à être reliés aux suspentes du parapente (20) ou du parachute ainsi qu'à celles du parachute de secours (3) pour assurer la suspension de la sellette et de son utilisateur en vol. Les points d'ancrage (15a, 15b) sont disposés sur la face externe des parois latérales (12a, 12b) et sont constitués par un mousqueton lié à travers lesdites parois latérales aux différentes sangles ou parois d'appui.

Par ailleurs, la zone médiane (4b) de la sellette (1) peut avantageusement comporter une poche arrière destinée à recevoir un dispositif d'amortissement de choc, du type de celui décrit dans la demande de brevet n° 97 11915 de la demanderesse afin d'amortir les chocs pouvant être occasionnés lors d'un atterrissage difficile.

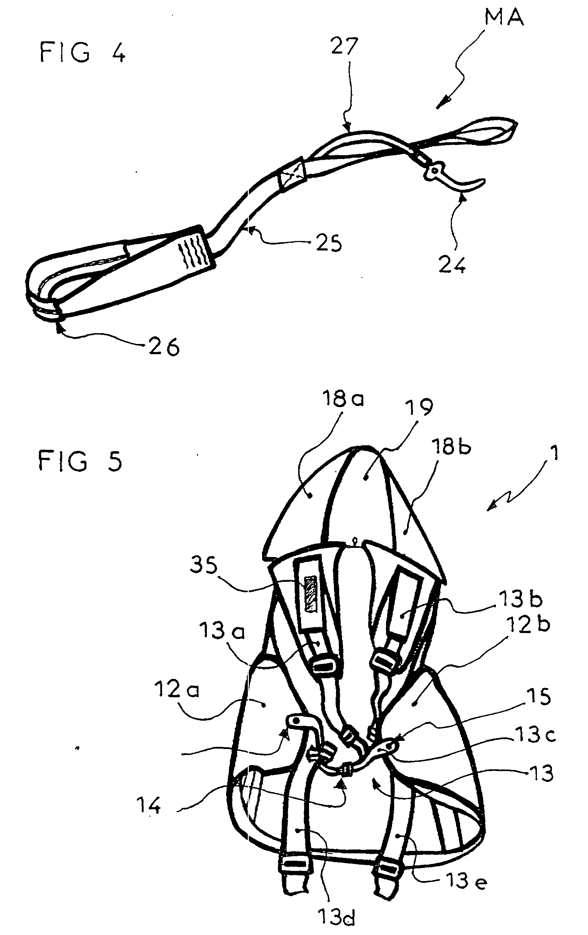

Comme le montre les figures 2 et 5, l'enceinte principale (8) destinée au parachute auxiliaire (3) est constituée par la face externe de l'extrémité supérieure de la paroi dorsale (11) et par une paroi souple (16) avantageusement réalisée en tissus élastique. Elle est disposée à l'intérieur d'une enceinte secondaire (17) semi-rigide qui peut éventuellement permettre le rangement du sac servant à transporter le matériel du parapentiste.

L'enceinte secondaire (17) est constituée par deux parois latérales (18a, 18b) et une paroi arrière (19), une ouverture trouvant être fermée de manière connue en soi par un dispositif de type fermeture ECLAIR (marque déposée) par exemple, étant prévue entre la paroi arrière et l'une des parois latérales de l'enceinte.

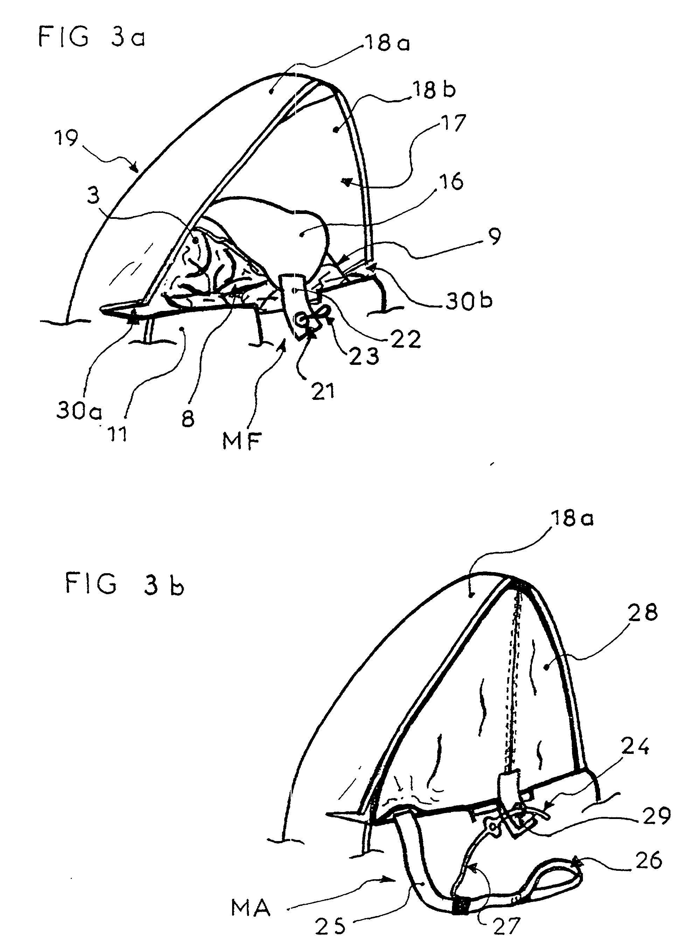

L'enceinte principale (8) destinée au parachute auxiliaire comporte des moyens de fermeture (MF) destinés à permettre d'empêcher la sortie intempestive du parachute auxiliaire. Lesdits moyens sont constitués par un oeillet (21) disposé sur une patte de fermeture (22) de la paroi souple (16) dans lequel une boucle (23) solidaire de l'extrémité supérieure de la paroi dorsale (11) est destinée à passer avant qu'une aiguille (24) ou goupille vienne verrouiller lesdits moyens de fermeture en passant dans ladite boucle comme le montre la figure 3a et 3b. Notons que l'enceinte principale (8) étant munie d'une paroi souple (16) élastique, le parachute de secours (3) sollicite ladite paroi souple (16) sur laquelle est disposée la patte de fermeture (22) contre l'aiguille (24), empêchant ainsi l'ouverture de l'enceinte principale (8) et la sortie du parachute de secours (3). Il va de soi que les moyens de fermeture pourraient être remplacés par tout autres moyens équivalents sans pour autant sortir du champs de protection de l'invention.

Les moyens de fermeture de l'enceinte principale (8) sont destinés à pouvoir être actionnés par des moyens de commande ou moyens d'actionnement (MA) permettant de provoquer l'ouverture de l'enceinte principale. Lesdits moyens d'actionnement (MA) sont également reliés au parachute de secours (3) de manière à permettre son extraction de l'enceinte principale et son ouverture en cas d'urgence comme le montre les figures 3b, 6b et 6c.

Les moyens d'actionnement (MA) illustrés figures 3 et 4 sont avantageusement constitués par une sangle d'ouverture (25) munie d'une poignée de commande (26) à une de ses extrémités tandis que l'autre extrémité est reliée au parachute de secours (3) de manière à ce que l'utilisateur puisse l'extraire de l'enceinte principale (8) et le projeter loin de lui. La sangle d'ouverture (25) comporte également un lien souple (27) portant à son extrémité l'aiguille (24) ; ainsi lorsque l'utilisateur tire sur la poignée de commande (26), la traction sur la sangle et donc sur le lien souple permet à l'aiguille (24) de sortir de la boucle (23) libérant la paroi souple (16) et permettant de ce fait l'ouverture de l'enceinte principale (8) d'une part et l'extraction du parachute de secours (3) situé dans l'enceinte principale (8) d'autre part. Notons que l'enceinte principale (8) présentant son ouverture (9) vers l'avant (AV) et vers le haut (HA), l'extraction du parachute (3) s'effectue au dessus de l'épaule ou de la tête de l'utilisateur (6) comme le montre les figures 6b et 6c.

La sellette (1) selon l'invention comporte des moyens de positionnement des moyens d'actionnement (MA) du parachute de secours (3) de manière à positionner ces moyens d'actionnement dans une position fixe, facilement atteignable par l'utilisateur (6) et situé dans son champs de vision afin qu'il n'ait pas à les chercher lorsqu'il désire les actionner. Ces moyens de positionnement peuvent avantageusement être constitués par un dispositif d'attache rapide (35) du type VELCRO (Marque déposée) disposé sur l'une des bretelles supérieures (13a, 13b) de façon à être situé sur l'épaule ou légèrement en dessous de l'épaule, sur le torse de l'utilisateur. De cette manière, lors de l'actionnement de la poignée de commande (26) par l'utilisateur, celui-ci peut dans un même geste de traction continu provoquer l'ouverture de l'enceinte principale (8) et l'extraction du parachute auxiliaire (3) tel que précédemment décrit ainsi que sa projection vers l'extérieur, opération qui dans les dispositifs de l'art antérieur nécessitaient souvent plusieurs gestes distincts.

Par ailleurs, l'enceinte secondaire (17) et son enceinte principale (8) interne, peuvent être avantageusement obturées à l'aide d'une paroi frontale ou capot (28) afin d'éviter une prise au vent importante de leur ouverture pendant le vol, ledit capot étant destiné à s'ouvrir lors de l'actionnement des moyens de commande (MA). Pour ce faire, et comme le montre schématiquement la figure 3b, ladite paroi frontale (28) comprend un oeillet inférieure (29) destiné à coopérer avec la boucle (23) ainsi que des dispositifs d'attache rapides non représentés de type VELCRO (Marque déposée) en bordure pour être solidarisé avec les parois latérales (18a, 18b) de l'enceinte secondaire (17), la paroi frontale (28) pouvant être solidaire d'une des parois latérales par un endroit au moins afin de ne pas la perdre lors de l'actionnement du parachute de secours (3).

Notons également que les parois latérales (18a, 18b) de l'enceinte secondaire (17) comportent au niveau de son ouverture deux échancrures ou fentes latérales (30a, 30b) comme le montre les figures 3a et 3b entre leurs bords inférieurs et la paroi d'appui dorsale (11) de manière à faciliter la sortie du parachute auxiliaire (3) de l'enceinte principale (8).

Bien entendu, l'invention n'est pas limitée au mode de réalisation décrit et représenté à titre d'exemple, mais elle comprend aussi tous les équivalents techniques ainsi que leur combinaison selon les revendications.

## Revendications

1. Sellette (1) destinée à la pratique de sports tels que le parapente ou le parachutisme, du type comportant un emplacement (2) destiné à lui permettre d'être équipée d'un parachute auxiliaire ou parachute de secours (3), ledit emplacement (2) étant situé dans la zone supérieure (4a) de la sellette (1) au dessus de la zone centrale ou médiane (4b) occupée par le bassin (5) de l'utilisateur (6) et étant formé par une enceinte principale (8) qui présente des moyens de fermeture (MF) dont l'ouverture est commandée par l'actionnement de moyens d'actionnement (MA) destinés également à provoquer l'extraction du parachute de secours (3) de l'enceinte principale (8) **caractérisé en ce que** les moyens d'actionnement (MA) sont positionnés sur l'épaule ou légèrement en dessous sur le torse de l'utilisateur grâce à des moyens de positionnement (35) de la sellette.

2. Sellette (1) selon la revendication 1 **caractérisée en ce que** les moyens d'actionnement (MA) sont formés par une poignée (26) dont l'actionnement dans un geste de traction continu provoque l'ouverture de l'enceinte principale (8), l'extraction du parachute auxiliaire (3) et sa projection vers l'extérieur.

3. Sellette (1) selon l'une quelconque des revendications précédentes **caractérisée en ce que** les moyens de positionnement de la sellette (1) sont disposés sur l'une de ses bretelles supérieur (13a, 13b).

4. Sellette (1) selon l'une quelconque des revendications précédentes **caractérisée en ce que** les moyens de positionnement sont constitués par un dispositif d'attache rapide.

5. Sellette (1) selon Tune quelconque des revendications précédentes **caractérisée en ce que** l'emplacement (2) est situé sur la sellette (1) dans sa partie dorsale (7) au niveau de la zone occupée par les épaules et le cou de l'utilisateur (6).

6. Sellette (1) selon la revendication 5 **caractérisée en ce que** remplacement (2) est constitué par une enceinte principale (8) présentant une ouverture (9) destinée à l'extraction du parachute auxiliaire (3).

7. Sellette (1) selon la revendication 6 **caractérisée en ce que** l'ouverture (9) de l'enceinte principale (8) est dirigé vers l'avant (AV) et vers le haut (HA) de manière à ce que le parachute auxiliaire (3) puisse être extrait au dessus de l'épaule ou de la tête de l'utilisateur.

8. Sellette (1) selon la revendication 6 ou la revendication 7 **caractérisée en ce que** l'enceinte principale (8) est constituée par la face externe de la paroi d'appui dorsale (11) de la sellette et par une paroi souple (16), ladite enceinte principale (8) étant disposée à l'intérieur d'une enceinte secondaire (17) semi rigide.

9. Sellette (1) selon la revendication 6 et 8 **caractérisée en ce que** les parois latérales (18a, 18b) de l'enceinte secondaire (17) bordant l'ouverture (9) de l'enceinte principale (8) destinée au parachute (3) comportent une échancrure ou fente latérale (30a, 30b) permettant l'écartement desdites parois au niveau de l'ouverture (9) de manière à faciliter l'extraction du parachute auxiliaire (3).

10. Sellette (1) selon l'une quelconque des revendications précédentes **caractérisée en ce que** les moyens d'actionnement (MA) sont constitués par une sangle d'ouverture (25) munie d'une poignée de commande (26) à une de ses extrémités tandis que l'autre extrémité est reliée au parachute de secours (3), la sangle d'ouverture (25) comportant également un lien souple (27) portant à son extrémité une aiguille (24), pour que la traction sur la sangle et donc sur le lien souple exercée par l'utilisateur permette à l'aiguille (24) de sortir d'une boucle (23) libérant de ce fait l'ouverture de l'enceinte principale (8) d'une part et provoque l'extraction du parachute de secours (3) situé dans l'enceinte principale (8) d'autre part.

## Patentansprüche

1. Sitz (1) zum Betreiben von Sportarten wie Gleitschirmfliegen oder Fallschirmspringen umfassend einen Platz (2) zum Unterbringen eines Reserve- oder Notschirms (3), wobei dieser Platz (2) sich im oberen Bereich (4a) des Sitzes (1) oberhalb des vom Becken (5) des Benutzers eingenommenen zentralen oder mittigen Bereichs (4b) befindet und aus einem Hauptraum (8) gebildet wird, der Verschlussmittel (MF) aufweist, deren Öffnung durch die Betätigung von gleichzeitig das Entnehmen des Notschirms (3) aus dem Hauptraum (8) auslösenden Betätigungsmitteln (MA) gesteuert wird, **dadurch gekennzeichnet**, dass die Betätigungsmittel (MA) an der Schulter oder leicht unterhalb davon auf dem Oberkörper des Benutzers mittels Positionierungsmittel (35) des Sitzes angeordnet sind.

2. Sitz (1) nach Anspruch 1, **dadurch gekennzeichnet**, dass die Betätigungsmittel (MA) durch einen Griff (26) gebildet sind, der durch einen kontinuierlichen Zug betätigt wird, wodurch der Hauptraum (8) geöffnet, der Reserveschirm (3) entnommen und nach außen geschleudert wird.

3. Sitz (1) nach einem der vorangehenden Ansprüche, **dadurch gekennzeichnet**, dass die Positionierungsmittel des Sitzes (1) an einem seiner oberen Gurte (13a, 13b) angebracht sind.

4. Sitz (1) nach einem der vorangehenden Ansprüche, **dadurch gekennzeichnet**, dass die Positionierungsmittel aus einer Schnellbefestigungsvorrichtung bestehen.

5. Sitz (1) nach einem der vorangehenden Ansprüche, **dadurch gekennzeichnet**, dass der Platz (2) am Rückenteil (7) des Sitzes (1) auf der Höhe des von den Schultern und dem Hals des Benutzers (6) eingenommenen Bereichs angebracht ist.

6. Sitz (1) nach Anspruch 5, **dadurch gekennzeichnet**, dass der Platz (2) aus einem Hauptraum (8) besteht, der eine Öffnung (9) zum Entnehmen des Reserveschirms (3) aufweist.

7. Sitz (1) nach Anspruch 6, **dadurch gekennzeichnet**, dass die Öffnung (9) des Hauptraums (8) derart nach vorn (AV) und nach oben (HA) gerichtet ist, dass der Reserveschirm (3) über der Schulter oder dem Kopf des Benutzers entnommen werden kann.

8. Sitz (1) nach Anspruch 6 oder 7, **dadurch gekennzeichnet**, dass der Hauptraum (8) durch die äußere Fläche der Rückenstützwand (11) des Sitzes und durch eine flexible Wand (16) gebildet wird, wobei der Hauptraum (8) innerhalb eines halbsteifen Nebenraums (17) angeordnet ist.

9. Sitz (1) nach den Ansprüchen 6 und 8, **dadurch gekennzeichnet**, dass die die Öffnung (9) des zur Unterbringung des Fallschirms (3) dienenden Hauptraums (8) begrenzenden Seitenwände (18a, 18b) des Nebenraums (17) einen seitlichen Ausschnitt oder Spalt (30a, 30b) aufweisen, der es ermöglicht, die Wände auf der Höhe der Öffnung (9) derart auseinander zu biegen, dass das Entnehmen des Reserveschirms (3) erleichtert wird.

10. Sitz (1) nach einem der vorangehenden Ansprüche, **dadurch gekennzeichnet**, dass die Betätigungsmittel (MA) aus einem Öffnungsriemen (25) bestehen, der an seinem einen Ende mit einem Steuergriff (26) versehen ist, während sein anderes Ende mit dem Notschirm (3) verbunden ist, wobei der Öffnungsriemen (25) auch ein elastisches Band (27) umfasst, das an seinem Ende mit einer Nadel (24) versehen ist, damit durch den durch den Benutzer ausgeübten Zug auf den Riemen und somit auf das elastische Band die Nadel (24) aus einer Schleife (23) gleiten kann, wodurch einerseits die Öffnung des Hauptraums (8) freigegeben und andererseits das Entnehmen des im Hauptraum (8) befindlichen Notschirms (3) bewirkt wird.

## Claims

1. Seat (1) intended for the practice of sports such as parapenting or parachuting, of the type including a location (2) designed to enable it to be equipped with an auxiliary parachute or emergency parachute (3), the said location (2) being situated in the upper zone (4a) of the seat (1) above the central or middle zone (4b) occupied by the pan (5) for the user (6) and being formed of a main enclosure (8) which has means of closure (MF) of which the opening is controlled by the actuation of actuating means (MA) also designed to bring about the extraction of the emergency parachute (3) from the main enclosure (8), **characterized in that** the actuating means (MA) are positioned on or slightly below the shoulder on the torso of the user by virtue of the positioning means (35) of the seat.

2. Seat (1) according to claim 1, **characterized in that** the actuating means (MA) are formed of a handle (26), the actuation of which in a continuous tractional movement causes the opening of the main enclosure (8), the extraction of the auxiliary parachute (3) and its outward projection.

3. Seat (1) according to either of the preceding claims, **characterized in that** the positioning means of the seat (1) are arranged on one of its upper shoulder straps (13a, 13b).

4. Seat (1) according to any one of the preceding claims, **characterized in that** the positioning means consist of a rapid attachment device.

5. Seat (1) according to any one of the preceding claims, **characterized in that** the location (2) is situated on the seat (1) in its dorsal part (7) in the region of the zone occupied by the shoulders and neck of the user (6).

6. Seat (1) according to claim 5, **characterized in that** the location (2) consists of a main enclosure (8) having an opening (9) intended for the extraction of the auxiliary parachute (3).

7. Seat (1) according to claim 6, **characterized in that** the opening (9) of the main enclosure (8) is directed forwards (AV) and upwards (HA) so that the auxiliary parachute (3) can be extracted above the shoulders or the head of the user.

8. Seat (1) according to claim 6 or claim 7, **characterized in that** the main enclosure (8) consists of the outer face of the dorsal supporting wall (11) of the seat and by a flexible wall (16), the said main enclosure (8) being positioned inside a secondary semi-rigid enclosure (17).

9. Seat (1) according to claims 6 and 8, **characterized in that** the lateral walls (18a, 18b) of the secondary enclosure (17) bordering the opening (9) of the main enclosure (8) intended for the parachute (3) include a lateral cutaway or slot (30a, 30b) enabling the said walls to be separated in the region of the opening (9) so as to facilitate the extraction of the auxiliary parachute (3).

10. Seat (1) according to any one of the preceding claims, **characterized in that** the actuating means (MA) consist of an opening strap (25) provided with a control handle (26) at one of its ends, while the other end is connected to the emergency parachute (3), the opening strap (25) also including a flexible linkage (27) carrying a pin (24) at its end, so that traction on the strap and hence on the flexible linkage exerted by the user enables the pin (24) to leave a buckle (23) freeing, on account of this, the opening of the main enclosure (8) on the one hand and on the other hand bringing about the extraction of the emergency parachute (3) situated in the main enclosure (8).
